# EUROPEAN PATENT SPECIFICATION

(11) **EP 3 130 827 B1**
(45) Date of publication and mention of the grant of the patent: **02.10.2019**
(21) Application number: 15181101.5
(22) Date of filing: 14.08.2015
(51) Int. Cl.: F16J 15/447

(54) **SEALS**
DICHTUNGEN
JOINTS

(43) Date of publication of application: 15.02.2017
(73) Proprietor: Goodrich Actuation Systems Limited, West Midlands B90 4SS (GB)
(72) Inventor: Williamson, Thomas, Wolverhampton, West Midlands WV21DB (GB); Hawksworth, Andrew, Newport, West Midlands TF107EH (GB)
(74) Representative: Dehns

(56) References cited:
- AU-A1- 2011 201 080
- DE-A1- 2 225 186
- DE-A1- 19 747 127
- DE-B- 1 109 470
- US-A- 6 113 105

## Description

### TECHNICAL FIELD

The present disclosure relates to seals and in particular to labyrinth seals.

### BACKGROUND

Labyrinth seals are non-contact mechanical seals which prevent the movement of fluid from one location to another by creating a tortuous path for fluid. They are used in a wide range of applications, for example in sealing bearing compartments, actuator components and so on against the loss of lubricating fluid such as oil or for preventing the ingress of contaminants such as dirt or dust. However, often there is still some degree of leakage through the seal, and seals with complicated geometries to mitigate such leakage can be expensive to manufacture.

Examples of labyrinth seals are disclosed for example in DE 19747127 A1, AU 2011 201080 A1 and US 6113105 A. DE 2225186 A discloses a method of making a labyrinth seal.

### SUMMARY

From a first aspect, the present invention provides a method of making a labyrinth seal, as set forth in claim 1.

The use of an ALM manufacturing technique allows the two seal parts to be manufactured simultaneously with their sealing contours interlocking, eliminating the need to assemble multiple individual components as would otherwise be required to produce the complicated seal geometry.

The ALM technique used may vary depending on the particular materials used and the intended application of the seal. Suitable ALM techniques may include Direct Metal Laser Sintering (DMLS), Electron Beam Sintering (EBS), Electron Beam Melting (EBM), Laser Engineered Net Shaping (LENS), Laser Net Shape Manufacturing (LNSM), Direct Metal Deposition (DMD), Laser Powder Bed Fusion (LPBF), Selective Laser Sintering (SLS) and Selective Laser Melting (SLM), or any other applicable ALM technique.

In one embodiment, a powder bed DMLS technique is used.

### BRIEF DESCRIPTION OF THE DRAWINGS

Some embodiments of the disclosure will now be described, by way of example only, with reference to the accompanying drawings in which:
Figure 1 shows a first labyrinth seal;
Figure 2 shows a second labyrinth seal;
Figure 3 shows a third labyrinth seal;
Figure 4 shows a fourth of labyrinth seal; and
Figure 5 illustrates schematically a method of manufacturing the labyrinth seal of Figure 1, in accordance with the invention.

### DETAILED DESCRIPTION

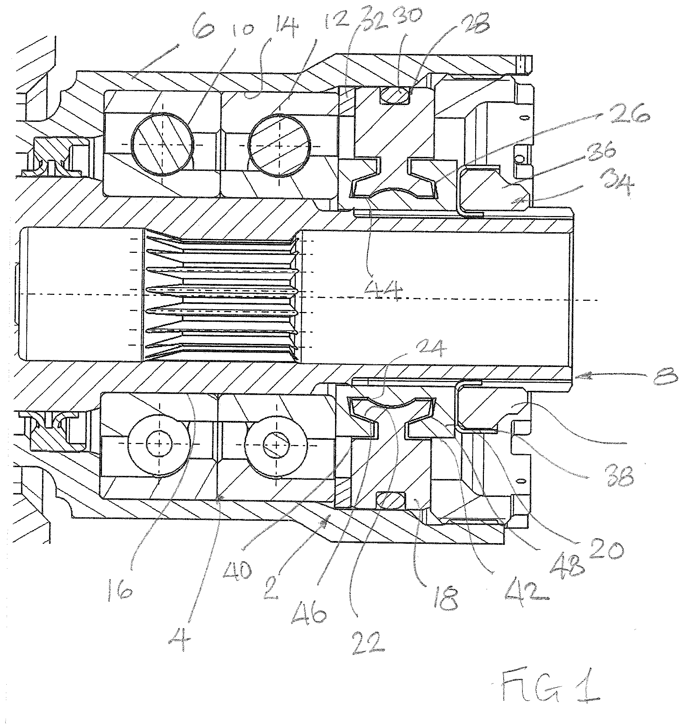

Figure 1 illustrates a labyrinth seal 2 sealing one side of a bearing compartment 4 arranged between a static support structure 6 and a rotary shaft 8. The labyrinth seal 2 may seal against the egress of a fluid, such as air, oil or grease, from the bearing compartment 4, or prevent or limit the ingress of a contaminant such as dirt or dust into the compartment.

First and second bearings 10, 12 are mounted between an inner surface 14 of the static support structure 6 and an outer surface 16 of the rotary shaft 8.

The labyrinth seal 2 comprises a first, one-piece annular seal part 18 and a second one-piece annular seal part 20. The first annular seal part 18 has a first, generally T-shaped (in cross section) sealing contour 22. The second annular seal part 18 has second sealing contour 24 which is complementary to the first sealing contour 22. A tortuous flow path 26 is formed between the first and second sealing contours 22, 24.

The first annular seal part 18 is received on the inner surface 14 of the static support structure 6 and is provided with a peripheral groove 28 which receives an annular sealing element 30 such as an O-ring. A spacer 32 is arranged between the first annular seal part 18 and the bearing 12.

The second annular sealing part 20 is received in a sealed manner on the rotary shaft 8.

The labyrinth seal 2 is retained in position by a retaining structure 34 such as a nut 36 and washer 38.

As can be seen, the tortuous flow path 26 starts at a first side 40 of the labyrinth seal 2 and finishes at a second, opposite side 42 of the labyrinth seal. The flow path 26 has both radial components and axial components, providing a relatively long and tortuous flow path. However, it will be noted that the axial components of the flow path 26 include not only a section 44 which extends in the direction from the first side 40 to the second side 42 of the labyrinth seal 2, but also sections 46, 48 which extend in (i.e. having a component which extends in), the opposite direction, i.e. in a direction having a from the second side 42 to the first side 40 of the labyrinth seal 2. By having a flow path 26 which has axial flow in both these directions, in effect having one or more "reverse flow direction" sections, the length of the flow path 26 can be increased while keeping the labyrinth seal 2 relatively compact.

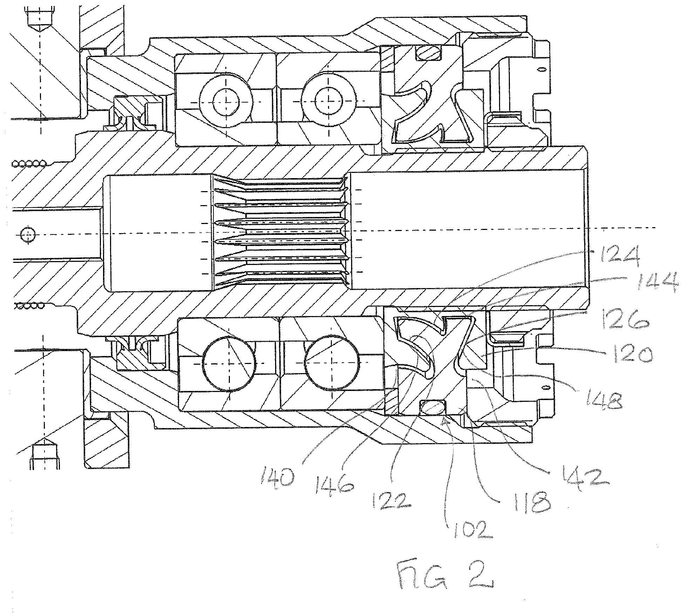

The particular shape of the sealing contours of the first and second seal parts 18, 20 may vary depending on the degree of sealing required and the amount of space available. Figures 2 to 4 illustrate alternative exemplary seal contours. The other detail of the seal and its arrangement are unchanged and need not therefore be described further.

In Figure 2, a first seal part 118 has a generally Y-shaped first sealing contour 122 and a second seal part 120 a complementary second sealing contour 124. The tortuous flow path 126 has axial sections 144 which extend in the direction from a first side 140 of the labyrinth seal 102 to a second side 142 of the labyrinth seal 102, and sections 146, 148 which extend in (i.e. having a component which extends in), the opposite direction, i.e. in a direction having a from the second side 142 to the first side 140 of the labyrinth seal 102. The sections 146, 148 have both a radial and an axial component in this embodiment.

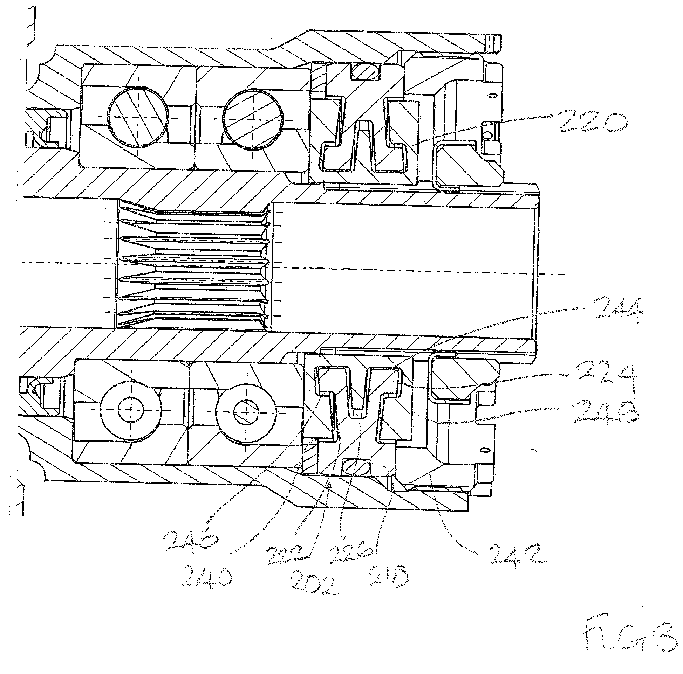

In Figure 3, a first seal part 218 has a generally V-shaped first sealing contour 222 and a second seal part 220 a complementary second sealing contour 224. The tortuous flow path 226 has axial sections 244 which extend in the direction from a first side 240 of the labyrinth seal 202 to a second side 242 of the labyrinth seal 202, and sections 246, 248 which extend in (i.e. having a component which extends in), the opposite direction, i.e. in a direction having a from the second side 242 to the first side 240 of the labyrinth seal 202. The sections 246, 248 also have both a radial and an axial component in this embodiment.

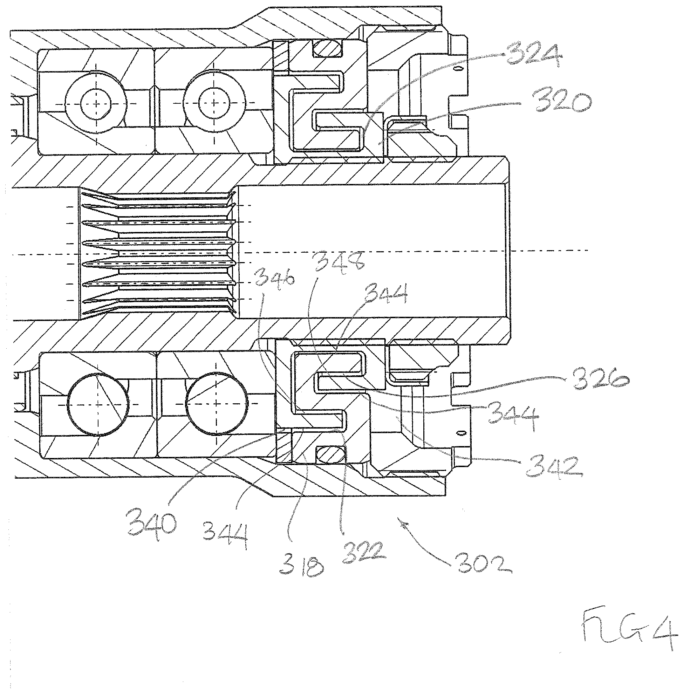

In Figure 4, a first seal part 318 has a generally Y-shaped first sealing contour 322 and a second seal part 320 a complementary second sealing contour 324. The tortuous flow path 326 has axial sections 344 which extend in the direction from a first side 340 of the labyrinth seal 302 to a second side 342 of the labyrinth seal 302, and sections 346, 348 which extend in (i.e. having a component which extends in), the opposite direction, i.e. in a direction from the second side 342 to the first side 340 of the labyrinth seal 302. The sections 346, 348 hare generally axial in this embodiment.

The first and second seal parts are one-piece components and in accordance with the invention are manufactured in a single operation using an Additive Layer Manufacturing (ALM) technique. In an ALM technique, a component is built up in successive layers. A powder or other material is melted by laser or electron beam and solidified to create a series of layers of deposited material. Examples of ALM techniques include Direct Metal Laser Sintering (DMLS), Electron Beam Sintering (EBS), Electron Beam Melting (EBM), Laser Engineered Net Shaping (LENS), Laser Net Shape Manufacturing (LNSM), Direct Metal Deposition (DMD), Laser Powder Bed Fusion (LPBF), Selective Laser Sintering (SLS) and Selective Laser Melting (SLM), or any other applicable ALM technique.

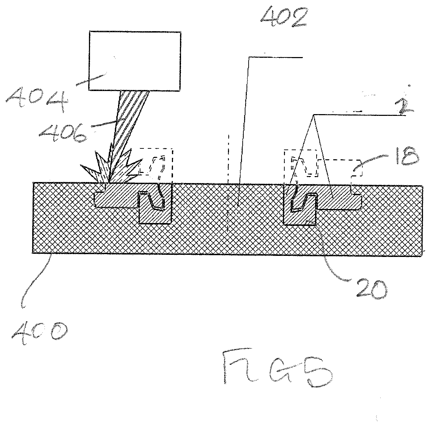

Figure 5 illustrates schematically a DMLS process for producing the labyrinth seal 2 of Figure 1.

As a first stage in the process, a CAD model is generated in 'STL' format and 'sliced' into sections using propriety software.

Fabrication material 400 in powder form, is introduced onto a support bed 402 of ta DLMS machine. The fabrication material 400 will be chosen in accordance with the particular application but may be, for example, a metal, for example a metal alloy such as stainless steel, for example 17-4, 15-5 or 316 stainless steel. Other materials, for example aluminium, may of course be used depending on the application.

This support bed 402 is arranged under a laser source 404. A laser beam 406 produced by the laser source 404 scans over the powder 400 on the bed 402 following the profile of the relevant slice of the CAD file. This sinters the fabrication powder 400 on the bed 402 thereby forming a corresponding layer of the seal.

Once a layer has been created, the support bed 402 is lowered slightly and a new thin layer of fabrication powder 400 is spread over the top of the bed 402 and over the previously deposited layer. It will be understood that either the previously sintered layer or the un-melted powder will form an appropriate support for newly deposited powder material 400. The sintering process is then repeated, with the laser beam following the desired sintering path. The orientation of the seal during the sintering process can be chosen as appropriate to facilitate construction.

When the machine has carried out the necessary number of cycles to build the seal, the completed seal is removed from the support bed 402. It will be understood that both the first seal part 18 and the second seal part 20 are created simultaneously using this technique and that the seal 2 is therefore created "pre-assembled". There will be a layer of un-melted powder material 400 between the first and second seal parts 18, 20, which can be removed in any appropriate manner, for example by blowing. This clears the tortuous flow path 26 between the first and second seal parts 18, 20.

The use of an ALM technique is therefore advantageous in embodiments as it allows the creation of very complicated tortuous flow paths through the labyrinth seal, thereby improving the sealing performance of the seal. Moreover, the technique allows the labyrinth seal to be fabricated "pre-assembled" in a single step, avoiding the need for assembly. The labyrinth seal may accordingly be smaller for a given leakage, allowing the seal to be used in applications where space is limited.

It will be appreciated that the various embodiments described above are merely examples and that other arrangements will fall within the scope of this disclosure.

For example, while the labyrinth seal has been shown as sealing a bearing compartment, it could be used in any application where a dynamic seal is required between two relatively rotatable components.

In addition, other shapes of seal contours may be used to provide a flow path with one or more "reverse flow direction" sections. For example, the seal contour might have a Z- shape, an Ω shape or another more complicated shape.

As illustrated, the sealing contours may be symmetrical or asymmetrical. Also, the sealing contour can have just one reverse flow direction section, two or more than two such sections.

The reverse flow direction sections can be purely axial, or may have both axial and radial components.

Also, while the ALM technique has been disclosed as being used in creating labyrinth seals having a particular shapes of flow path, it could be used in the construction of any interlocking contour labyrinth seal, not necessarily one with one or more "reverse-flow direction" sections as described. Indeed, the disclosure is applicable to all interlocking sealing contours. The use of an ALM technique allows the creation of extremely tortuous flow paths.

## Claims

1. A method of making a labyrinth seal comprising a first seal part (18; 118; 218; 318) having a first sealing contour (22; 122; 222; 322) and a second seal part (20; 120; 220; 320) rotatable relative to the first seal part (18; 118; 218; 318) and having a second sealing contour (24; 124; 224; 324) complementary to and interlocking with the first sealing contour (22; 122; 222; 322) to provide a tortuous fluid flow path (26; 126; 226; 326) from a first side (40; 140; 240; 340) of the seal to a second, opposite side (42; 142; 242; 342) of the seal, the method comprising forming the first (18; 118; 218; 318) and second seal (20; 120; 220; 320) parts together, with their sealing contours interlocking using an ALM technique.

2. A method of making a labyrinth seal as claimed in claim 1, wherein the ALM technique used is one of Direct Metal Laser Sintering (DMLS), Electron Beam Sintering (EBS), Electron Beam Melting (EBM), Laser Engineered Net Shaping (LENS), Laser Net Shape Manufacturing (LNSM), Direct Metal Deposition (DMD) and Laser Powder Bed Fusion (LPBF).

3. A method of making a labyrinth seal as claimed in claim 1 or 2, wherein the ALM technique is a powder bed DMLS technique.

4. A method of making a labyrinth seal as claimed in any preceding claim, wherein the tortuous fluid flow path (26; 126; 226; 326) extends from a first side (40; 140; 240; 340) of the seal to a second, opposite side (42; 142; 242; 342) of the seal, the flow path (26; 126; 226; 326) including at least one section (46, 48; 146, 148; 246, 248; 346, 348) in which the fluid flows in a direction from the second side (42; 142; 242; 342) of the seal towards the first side (40; 140; 240; 340) of the seal.

5. A method of making a labyrinth seal as claimed in any preceding claim, wherein the first sealing contour (22) is generally T-shaped in cross section.

6. A method of making a labyrinth seal as claimed in any of claims 1 to 4, wherein the first sealing contour (122) is generally Y-shaped in cross section.

7. A method of making a labyrinth seal as claimed in any of claims 1 to 4, wherein the first sealing contour (222) is generally V-shaped in cross section.

8. A method of making a labyrinth seal as claimed in any of claims 1 to 4, wherein the first sealing contour (322) is generally S-shaped or Z-shaped in cross section.

9. A method of making a labyrinth seal as claimed in any preceding claim, wherein said first seal part (18; 118; 218; 318) and said second seal part (20; 120; 220; 320) are both annular components.

## Patentansprüche

1. Verfahren zum Herstellen einer Labyrinthdichtung, umfassend ein erstes Dichtungsteil (18; 118; 218; 318), das ein erstes Dichtungsprofil (22; 122; 222; 322) aufweist, und ein zweites Dichtungsteil (20; 120; 220; 320), das im Verhältnis zum ersten Dichtungsteil (18; 118; 218; 318) drehbar ist und ein zweites Dichtungsprofil (24; 124; 224; 324) aufweist, das zum ersten Dichtungsprofil (22; 122; 222; 322) komplementär ist und mit diesem ineinandergreift, um einen gewundenen Fluidströmungsweg (26; 126; 226; 326) von einer ersten Seite (40; 140; 240; 340) der Dichtung zu einer zweiten, gegenüberliegenden Seite (42; 142; 242; 342) der Dichtung bereitzustellen, wobei das Verfahren das Herstellen des ersten (18; 118; 218; 318) und des zweiten Dichtungsteils (20; 120; 220; 320) zusammen, wobei ihre Dichtungsprofile ineinandergreifen, unter Verwendung eines additiven Fertigungsverfahrens umfasst.

2. Verfahren zum Herstellen einer Labyrinthdichtung nach Anspruch 1, wobei das additive Fertigungsverfahren eines aus direktem Metall-Lasersintern (DMLS), Elektronenstrahlsintern (EBS), Elektronenstrahlschmelzen (EBM), Laser Engineered Net Shaping (LENS), Laser Net Shape Manufacturing (LNSM), direkter Metallabscheidung (DMD) und Laser Powder Bed Fusion (LPBF) ist.

3. Verfahren zum Herstellen einer Labyrinthdichtung nach Anspruch 1 oder 2, wobei das additive Fertigungsverfahren ein Pulverbett-DMLS-Verfahren ist.

4. Verfahren zum Herstellen einer Labyrinthdichtung nach einem der vorstehenden Ansprüche, wobei der gewundene Fluidströmungsweg (26; 126; 226; 326) von einer ersten Seite (40; 140; 240; 340) der Dichtung zu einer zweiten, gegenüberliegenden Seite (42; 142; 242; 342) der Dichtung verläuft, wobei der Strömungsweg (26; 126; 226; 326) mindestens einen Abschnitt (46, 48; 146, 148; 246, 248; 346, 348), in dem das Fluid in einer Richtung von der zweiten Seite (42; 142; 242; 342) der Dichtung zur ersten Seite (40; 140; 240; 340) der Dichtung strömt, beinhaltet.

5. Verfahren zum Herstellen einer Labyrinthdichtung nach einem der vorstehenden Ansprüche, wobei das erste Dichtungsprofil (22) im Allgemeinen einen T-förmigen Querschnitt aufweist.

6. Verfahren zum Herstellen einer Labyrinthdichtung nach einem der Ansprüche 1 bis 4, wobei das erste Dichtungsprofil (122) im Allgemeinen einen Y-förmigen Querschnitt aufweist.

7. Verfahren zum Herstellen einer Labyrinthdichtung nach einem der Ansprüche 1 bis 4, wobei das erste Dichtungsprofil (222) im Allgemeinen einen V-förmigen Querschnitt aufweist.

8. Verfahren zum Herstellen einer Labyrinthdichtung nach einem der Ansprüche 1 bis 4, wobei das erste Dichtungsprofil (322) im Allgemeinen einen S-förmigen oder einen Z-förmigen Querschnitt aufweist.

9. Verfahren zum Herstellen einer Labyrinthdichtung nach einem der vorstehenden Ansprüche, wobei das erste Dichtungsteil (18; 118; 218; 318) und das zweite Dichtungsteil (20; 120; 220; 320) beide ringförmige Bauteile sind.

## Revendications

1. Procédé de fabrication d'un joint à labyrinthe comprenant une première partie de joint (18 ; 118 ; 218 ; 318) ayant un premier contour d'étanchéité (22 ; 122 ; 222 ; 322) et une seconde partie de joint (20 ; 120 ; 220 ; 320) pouvant tourner par rapport à la première partie de joint (18 ; 118 ; 218 ; 318) et ayant un second contour d'étanchéité (24 ; 124 ; 224 ; 324) complémentaire du premier contour d'étanchéité (22 ; 122 ; 222 ; 322) et s'emboîtant sur celui-ci pour fournir un trajet d'écoulement de fluide tortueux (26 ; 126 ; 226 ; 326) d'un premier côté (40 ; 140 ; 240 ; 340) du joint à un second côté opposé (42 ; 142 ; 242 ; 342) du joint , le procédé comprenant la formation des premier (18 ; 118 ; 218 ; 318) et second (20 ; 120 ; 220 ; 320) joints ensemble, avec leurs contours d'étanchéité s'emboîtant au moyen d'une technique ALM.

2. Procédé de fabrication d'un joint à labyrinthe selon la revendication 1, dans lequel la technique ALM utilisée est l'un du frittage laser direct de métal (DMLS), du frittage par faisceau d'électrons (EBS), de la fusion par faisceau d'électrons (EBM), de la mise en forme par laser (LENS), de la fabrication laser avec mise en forme précise (LNSM), du dépôt direct de métal (DMD) et de la fusion laser sur lit de poudre (LPBF).

3. Procédé de fabrication d'un joint à labyrinthe selon la revendication 1 ou 2, dans lequel la technique ALM est une technique DMLS sur lit de poudre.

4. Procédé de fabrication d'un joint à labyrinthe selon une quelconque revendication précédente, dans lequel le trajet d'écoulement de fluide tortueux (26 ; 126 ; 226 ; 326) s'étend d'un premier côté (40 ; 140 ; 240 ; 340) du joint à un second côté opposé (42 ; 142 ; 242 ; 342) du joint, le trajet d'écoulement (26 ; 126 ; 226 ; 326) comportant au moins une section (46, 48 ; 146, 148 ; 246, 248 ; 346, 348) dans laquelle le fluide s'écoule dans une direction allant du second côté (42 ; 142 ; 242 ; 342) du joint vers le premier côté (40 ; 140 ; 240 ; 340) du joint.

5. Procédé de fabrication d'un joint à labyrinthe selon une quelconque revendication précédente, dans lequel le premier contour d'étanchéité (22) est généralement en forme de T en coupe transversale.

6. Procédé de fabrication d'un joint à labyrinthe selon l'une quelconque des revendications 1 à 4, dans lequel le premier contour d'étanchéité (122) est généralement en forme de Y en coupe transversale.

7. Procédé de fabrication d'un joint à labyrinthe selon l'une quelconque des revendications 1 à 4, dans lequel le premier contour d'étanchéité (222) est généralement en forme de V en coupe transversale.

8. Procédé de fabrication d'un joint à labyrinthe selon l'une quelconque des revendications 1 à 4, dans lequel le premier contour d'étanchéité (322) est généralement en forme de S ou de Z en coupe transversale.

9. Procédé de fabrication d'un joint à labyrinthe selon une quelconque revendication précédente, dans lequel ladite première partie de joint (18 ; 118 ; 218 ; 318) et ladite seconde partie de joint (20 ; 120 ; 220 ; 320) sont toutes deux des composants annulaires.
